# EUROPÄISCHE PATENTSCHRIFT

(11) **EP 0 818 862 B1**
(45) Veröffentlichungstag und Bekanntmachung des Hinweises auf die Patenterteilung: **17.10.2001**
(21) Anmeldenummer: 97109817.3
(22) Anmeldetag: 17.06.1997
(51) Int. Cl.: H02G 3/04

(54) **Gitterkanal zur Aufnahme von Kabeln und Leitungen**
Wire channel for housing cables and ducts
Canalisation en fil pour loger câbles et conduites

(30) Priorität: 10.07.1996 CH 172696
(43) Veröffentlichungstag der Anmeldung: 14.01.1998
(73) Patentinhaber: ZURECON AG, CH-8003 Zürich (CH)
(72) Erfinder: Gerster, Max, Dr.oec., 8185 Winkel (CH)
(74) Vertreter: Kägi, Otto Patentanwalt

(56) Entgegenhaltungen:
- EP-A- 0 298 825
- FR-A- 2 590 736

## Beschreibung

Die Erfindung betrifft einen Gitterkanal zur Aufnahme von Kabeln und Leitungen, mit im wesentlichen U-förmig gebogenen, den Kanalquerschnitt bestimmenden Querdrähten und diese verbindenden, aussenliegenden Längsdrähten, wobei übereinander liegende, gleich breite Gitterkanäle mit in Längsrichtung gegeneinander versetzten Querdrähten ineinander greifen können.

Solche Gitterkanäle finden in der Installationstechnik verbreitete Anwendung. Sie zeichnen sich aus durch kostengünstige Herstellung und sehr gute Belüftung der verlegten Kabelstränge. Ein gewichtiger Nachteil besteht bisher jedoch darin, dass die GitterkanalAbschnitte für die Lagerung und beim Transport ein grosses Volumen beanspruchen, wodurch die Kostenvorteile der Herstellung zum grossen Teil wieder zunichte gemacht werden.

Bei den bekannten und ähnlich angewendeten Kabelkanälen aus U-förmig abgewinkeltem Blech kann diesem Umstand leicht abgeholfen werden, indem die Seitenwände leicht schräg (stumpfwinklig zum Boden) abgekantet und die leeren Kanäle dadurch ineinandergestapelt werden können (CH-Patent Nr. 634 178). Bei Gitterkanälen ist eine analoge Massnahme dagegen nicht anwendbar, weil die summierte Dicke der gekreuzten Gitterstäbe ein Vielfaches der bei Kabelkanälen aus Blech üblichen Wandstärken beträgt.

Um auch Gitterkanäle platzsparend lagern und transportieren zu können, sind verschiedene Vorschläge bekannt geworden. Sie bestehen im wesentlichen darin, die eine oder beide Seitenwände vom Boden getrennt herzustellen und die Teile so zu gestalten, dass sie entlang einer Längslinie entweder gelenkig miteinander verbunden oder zusammensteckbar sind, um das Kanalprofil zu bilden (FR-A-2 599 906, FR-A-2 613 146, EP-A-0 191 667). Dadurch entstehen allerdings ganz erhebliche Mehrkosten für die Teilefertigung, und ausserdem wird der Gebrauch bzw. die Montage umständlich und entsprechend verteuert.

Aus der EP-A-0 298 825 ist ferner ein Gitterkanal der eingangs genannten Gattung bekannt. Bei einem der Ausführungsbeispiele sind die Querdrähte in einem oberen Bereich leicht nach aussen abgewinkelt, wodurch übereinander liegende, gleich breite Gitterkanäle mit in Längsrichtung gegeneinander versetzten Querdrähten ineinander greifen können. In der Regel ist es allerdings so, dass mehrere über die Wandhöhe verteilte Längsdrähte vorgesehen werden, zumal bei höheren Seitenwänden zur Wahrung ausreichender Stabilität. Beim genannten, bekannten Gitterkanal ist dann die Tiefe des Eingreifens beim Stapeln sehr begrenzt, weil immer bereits der unterste Längsdraht des oberen Kanals auf dem obersten Längsdraht des unteren Kanals zur Auflage kommt. Eine erhebliche Volumeneinsparung bei der Lagerung - jedenfalls bei Gitterkanälen mit mehreren seitlichen Längsdrähten - kann deshalb nicht erreicht werden.

Mit der vorliegenden Erfindung sollen die erwähnten Nachteile bekannter Ausführungen von Gitterkanälen beseitigt werden. Insbesondere soll das für die Lagerung und den Transport der Gitterkanäle benötigte Volumen massgeblich reduziert werden, dies jedoch ohne erhebliche Kostensteigerung bei der Herstellung oder kompliziertere Handhabung des Produkts bei der Montage.

Diese Aufgabe wird erfindungsgemäss dadurch gelöst, dass die seitlichen Schenkel der Querdrähte in einer Abkröpfung nach aussen um ein Mass (a) zweifach abgewinkelt sind, das mindestens gleich der summierten Dicke der gekreuzten Längs- und Querdrähte ist, wodurch der Kanalquerschnitt in einem oberen Teilbereich entsprechend stufenförmig erweitert ist, um eine volumensparende Stapelung zu ermöglichen.

Mit einer solchen an sich einfachen Gestaltänderung wird erreicht, dass durch die zweifache Abkröpfung um das Mass (a) sich ein Längsdraht unterhalb der Abkröpfung befinden kann, der beim Ineinanderstapeln nicht stört und auch Gitterkanälen mit grösserer Wandhöhe eine hinreichende Stabilität verleiht. So lassen sich die Gitterkanäle gruppenweise zu handlichen "Paketen" stapeln und mit drastisch reduziertem Raumbedarf (bis zu 70% Volumeneinsparung) lagern und transportieren. Die Abkröpfungen an den Querdrähten erfordern nur geringen Fertigungsaufwand und können vorzugsweise an den bereits geschweissten Gittern vorgenommen werden. Für den Transport und auf der Baustelle bietet die Stapelung den weiteren Vorteil, dass die einzelnen Kanäle viel weniger zum "Verheddern" neigen und im Stapel einander gegenseitig Halt bieten, d.h. sich nicht verwinden oder verbiegen. Bei alledem werden die bekannten, guten Gebrauchseigenschaften der Gitterkanäle für den Anwender in keiner Weise beeinträchtigt.

Die Erfindung wird nachstehend anhand von Ausführungsbeispielen und in Verbindung mit der Zeichnung näher erläutert. In allen Figuren ist jeweils ein unterer Kanalabschnitt mit ausgezogenen Linien und darüber ein weiterer, gleicher Kanalabschnitt mit gestrichelten Linien dargestellt.
- Fig. 1: zeigt perspektivisch zwei übereinander angeordnete, jedoch noch nicht ineinandergestapelte, gleiche Gitterkanal-Abschnitte,
- Fig. 2: ist die Stirnansicht der beiden Kanalabschnitte nach Fig. 1, nun gestapelt,
- Fig. 3: ist die analoge Stirnansicht zweier gestapelter Kanalabschnitte mit höheren Seitenwänden, und
- Fig. 4: ist eine Seitenansicht der Anordnung nach Fig. 2.

Die dargestellten Gitterkanäle 10, 10' bestehen in gewohnter Weise aus etwa U-förmigen Querdrähten 1, die den Kanalquerschnitt bestimmen, und zueinander parallelen, die Querdrähte aussen verbindenden Längsdrähten 2. Die Herstellung erfolgt üblicherweise so, dass zunächst aus geraden Drähten ebene Gitter geschweisst werden und anschliessend Abschitte von geeigneter Länge (z.B. 3m) abgekantet werden, um die Seitenschenkel 3 der Querdrähte bzw. die Seitenwände des Kanals 10 zu bilden. Es wird z.B. 4mm-Stahldraht verwendet, entweder in rostfreier Qualität oder mit Verzinkung oder Plastifizierung der geschweissten Gitter.

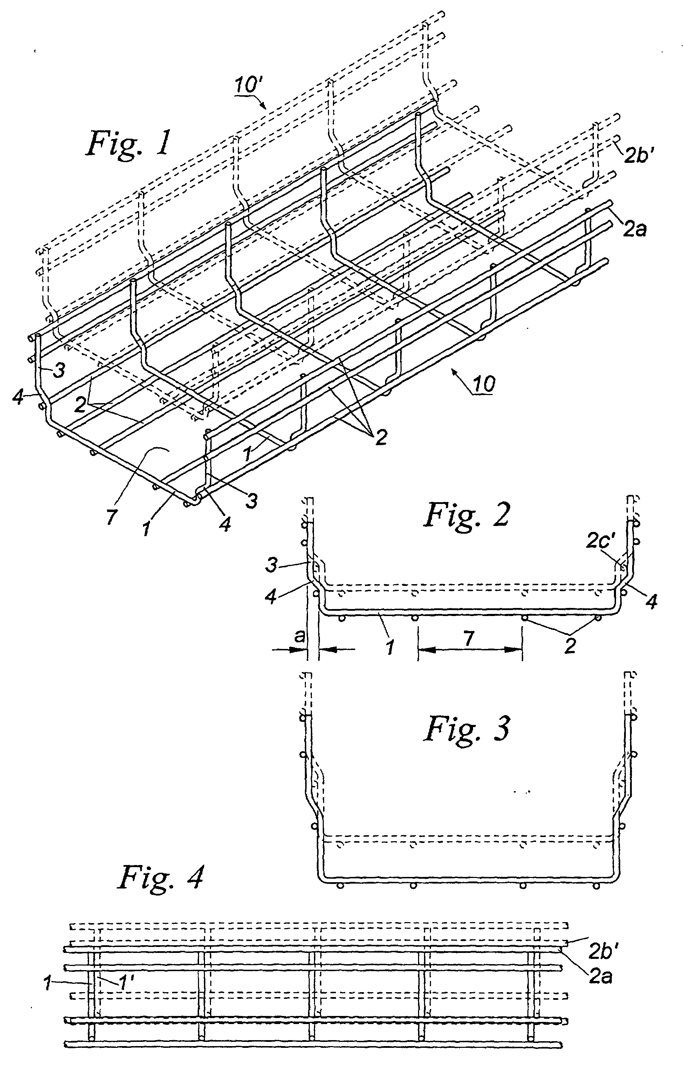

Wie dargestellt, sind nun die seitlichen Schenkel 3 der Querdrähte mit einer Abkröpfung 4 versehen, d.h. je zweifach abgewinkelt, derart, dass ein oberer Teilbereich des Kanalquerschnittes entsprechend erweitert ist. Das Mass a der Abkröpfung (Fig. 2) ist mindestens gleich der summierten Dicke der gekreuzten Drähte 1 und 2. So können ohne weiteres zwei und mehrere Gitterkanäle 10, 10' vertikal ineinander gestapelt werden, wobei die in regelmässiger Teilung angeordneten Querdrähte 1, 1' nebeneinander zu liegen kommen bzw. etwas längsversetzt sind (Fig. 4). Die bedeutende, durch gruppenweise Stapelung erreichbare Raumeinparung ist insbesondere aus den Fig. 2 und 3 leicht zu erkennen. Von Vorteil ist auch, dass die gestapelten Kanäle alle gleich ausgerichtet sind und nicht beim Entstapeln z.B. gewendet werden müssen.

Hinsichtlich der beim Stapeln erreichbaren Volumenverminderung ist es zweckmässig, wenn die Höhe des oberen, stufenartig erweiterten Querschnittsbereiches mindestens die Hälfte der gesamten Höhe des Kanalquerschnittes beträgt. Bei der Höhenlage der seitlichen Längsdrähte wird man zweckmässigerweise darauf achten, dass (an beiden Kanal-Längsseiten) der die oberen Enden der Querdrähte 1 verbindende Längsdraht 2a des jeweils unteren Kanals 10 die Auflage bildet für einen Längsdraht 2b' des jeweils oberen, gestapelten Kanals 10', der oberhalb der Abkröpfung 4 angebracht ist. Diese Art der Auflage ermöglicht das völlig ungehinderte Entstapeln der Kanäle; sie wird als zweckmässiger erachtet als wenn ein unterhalb der Abkröpfung 4 angeordneter Längsdraht 2c' des jeweils oberen Kanals 10' auf der schrägen Abkröpfung des unteren Kanals 10 aufliegen würde, da dies - beim Gewicht mehrerer übereinander liegender Kanäle - zum Verklemmen führen könnte.

Anhand der Fig. 2 und 3 ist leicht zu erkennen, dass Gitterkanäle gleicher Breite stapelbar sind, auch wenn sie unterschiedliche Höhe aufweisen (obwohl dies in der Praxis weniger von Bedeutung sein wird).

Zu erwähnen ist auch, dass mit dem erfindungsgemässen Abkröpfen der Seitenschenkel der Querdrähte nicht nur gerade Gitterkanalabschnitte stapelbar gemacht werden können, sondern auch sogenannte (nicht dargestellte) Formstücke, z.B. 90°- oder 45°-Bogen oder T-Stücke (Abzweiger), wie sie zwischen geraden Abschnitten eingesetzt werden.

Wie aus den Fig. 1, 2 und 3 schliesslich hervorgeht, werden die Längsdrähte 2 am Kanalboden zweckmässigerweise so angeordnet, dass ein mittlerer Längsbereich 7 frei bleibt, d.h. in der Mitte des Bodens kein Längsdraht 2 vorhanden ist. Dies ist von Vorteil für eine symmetrische, "hängende" Montage der Gitterkanäle, bei der (nicht dargestellte) vertikale Träger von oben durch die Mitte des Kanalbodens hindurch ragen und am unteren Ende der Träger angebrachte, querstehende Auflagen die Längsdrähte 2 untergreifen. Eine solche symmetrische Aufhängung der Gitterkanäle bietet Vorteile im Vergleich zum verbreiteten Auflegen auf Konsolen, die von seitlich der Kanäle angeordneten Trägern (Deckenstützen) ausgehen, da diese letztere Montageart unvermeidlich asymmetrische Belastungen verursacht und deshalb wesentlich stärkeres Trägermaterial erfordert.

## Patentansprüche

1. Gitterkanal (10) zur Aufnahme von Kabeln und Leitungen, mit im wesentlichen U-förmig gebogenen, den Kanalquerschnitt bestimmenden Querdrähten (1) und diese verbindenden, aussenliegenden Längsdrähten (2), wobei übereinander liegende, gleich breite Gitterkanäle (10, 10') mit in Längsrichtung gegeneinander versetzten Querdrähten (1) ineinander greifen können,
**dadurch gekennzeichnet,**
**dass** die seitlichen Schenkel (3) der Querdrähte (1) in einer Abkröpfung (4) nach aussen um ein Mass (a) zweifach abgewinkelt sind, das mindestens gleich der summierten Dicke der gekreuzten Längs- und Querdrähte ist, wodurch der Kanalquerschnitt in einem oberen Teilbereich entsprechend stufenförmig erweitert ist, um eine volumensparende Stapelung zu ermöglichen.

2. Gitterkanal nach Anspruch 1, **dadurch gekennzeichnet, dass** die Höhe des oberen, erweiterten Teilbereiches mindestens die Hälfte der Gesamthöhe des Kanalquerschnittes beträgt.

3. Gitterkanal nach Anspruch 1 oder 2, **dadurch gekennzeichnet, dass** an beiden Kanal-Längsseiten ein die oberen Enden der Querdrähte (1) verbindender Längsdraht (2a) eines jeweils unteren Kanals (10) die Auflage für einen oberhalb der Abkröpfung (4) angeordneten Längsdraht (2b') eines jeweils oberen gestapelten Kanals (10') bildet.

## Claims

1. Wire channel (10) for housing cables and ducts, comprising essentially U-shaped cross wires (1) which determine the channel cross-section, and longitudinal wires (2) joining the cross wires and running along the outside thereof, whereby stacked wire channels (10, 10') of equal width, with their cross wires (1) displaced lengthwise, can fit into each other in the stack,
**characterised in that**
the lateral uprights (3) of the cross wires (1) are bent at two points to form a jut (4) to the outside by a measure (a) which is at least equal to the combined thickness of the crossed longitudinal and cross wires, so that the cross-section of the channel in an upper part is widened correspondingly, enabling the wire channels to be stacked in a space saving manner.

2. Wire channel according to claim 1, **characterised in that** the height of the widened upper part is equal to at least half the total height of the channel cross-section.

3. Wire channel according to claim 1 or 2, **characterised in that**, on both sides of the channel, a longitudinal wire (2a) joining together the top ends of the cross wires (1), in a lower channel (10) forms the base on which longitudinal wires (2b') of an upper channel (10'), located above the jut (4) thereof, can rest when the channels are stacked.

## Revendications

1. Canalisation (10) en fil pour loger câbles et conduites, avec des fils transversaux (1) pliés pour l'essentiel en forme de U et déterminant la section transversale de la canalisation, et des fils longitudinaux (2) reliant les fils transversaux et situés à l'extérieur, de telle manière que des canalisations de même largeur (10, 10') posées l'une sur l'autre puissent s'emboîter en décalant en sens de la longueur leurs fils transversaux,
**caractérisée par le fait que** les montants latéraux (3) des fils transversaux (1) possèdent un double coude (4) vers l'extérieur constitué par deux angles, par une taille (a) au moins égale à la somme cumulée de l'épaisseur des fils longitudinaux et transversaux croisés, la section transversale de la canalisation par conséquence possédant dans une partie supérieure un élargissement etagé, afin de permettre un empilement économisant du volume.

2. Canalisation en fil selon la revendication 1, **caractérisée en ce que** la hauteur de la partie supérieure élargie ait une taille correspondant au moins à la moitié de la hauteur totale de la section transversale de la canalisation.

3. Canalisation en fil selon la revendication 1 ou 2, **caractérisée en ce que** de chaque côté longitudinale d'une canalisation inférieure (10) un fil longitudinal (2a) reliant les extrémités supérieures des fils transversaux (1) constitue l'appui d'un fil longitudinal (2b') situé au-dessus du double coude (4) d'une canalisation (10') empilée au-dessus.
